# EUROPEAN PATENT SPECIFICATION

(11) **EP 0 481 884 B1**
(45) Date of publication and mention of the grant of the patent: **15.07.1998**
(21) Application number: 91402760.2
(22) Date of filing: 15.10.1991
(51) Int. Cl.: G03B 9/06

(54) **Mechanism for detecting a rotation amount of a diaphragm for use in optical systems**
Vorrichtung zur Erfassung einer Drehverstellung einer Blende zum Gebrauch in optischen Systemen
Mécanisme pour la détection d'un changement d'angle de rotation d'un diaphragme, utilisable dans des systèmes optiques

(30) Priority: 16.10.1990 JP 276849/90
(43) Date of publication of application: 22.04.1992
(73) Proprietor: SONY CORPORATION, Tokyo (JP)
(72) Inventor: Kawamura, Hiroshi, Shinagawa-ku, Tokyo (JP); Tsujinaka, Masato, Shinagawa-ku, Tokyo (JP)
(74) Representative: Thévenet, Jean-Bruno

(56) References cited:
- EP-A- 0 114 404
- US-A- 4 922 274
- PATENT ABSTRACTS OF JAPAN vol. 6, no. 34 (P-104)(912) 2 March 1982 & JP-A-56 151 917 ( COPAL K.K. ) 25 November 1981
- PATENT ABSTRACTS OF JAPAN vol. 6, no. 125 (P-127)(1003) 10 July 1982 & JP-A-57 49 928 ( RICOH K.K. ) 24 March 1982

## Description

### BACKGROUND OF THE INVENTION

### 1. Field of the Invention

This invention relates to a mechanism for detecting a rotation amount of a diaphragm for use in an optical system such as a camera.

### 2. Description of the Background Art

A camera such as a still camera, a video camera and the like has a driving actuator which rotatably operates diaphragm blades through a rotating ring. Conventionally, the actuator is also used for detecting a rotation amount of the diaphragm blades of the camera. FIG. 5 depicts a conventional driving actuator which serves for detection of operation of the diaphragm blades. Referring to FIG. 5, a driving actuator 50 includes a rotor 51 and a stator 53. The rotor 51 consists of semi-circular north- and south-polar magnet halves 51a and 51b which are attached together symmetrically around an axis 52 so as to form a rotor of circular shape. The stator 53 is provided, on an inner surface thereof, with a Hall element 54. The Hall element 54 faces a boundary between the magnets 51a and 51b and detects change in leakage flux generated from the rotor 51, which is rotatingly driven by energization of a coil 55 disposed on the stator 53.

When the rotor 51 rotates, the leakage flux traversing the Hall element 54 is altered. An amount of rotation of the diaphragm blades is ascertained by detecting change in an amount of the leakage flux which traverses the Hall element.

However, the driving actuator 50 has a small diameter so that only a small peripheral surface area of the rotor 51 moves relative to the element 54. Accordingly, an accuracy of detection of the leakage flux is lowered. In case that an opening defined by the diaphragm blades has a considerably small diameter, it is difficult to determine the fine amount of rotation of the diaphragm blades since the detection can be made only within a limited range.

JP-A-56 151917 describes a device for controlling aperture blades in a camera. The aperture blades are positioned using an aperture blade operating ring and an aperture diameter setting ring driven by motors. In order to smooth a resetting operation of the aperture blades, a magnet is provided on the aperture blade operating ring and magnetic material is provided on the aperture diameter setting ring, or vice versa, so as to produce a magnetic coupling having a smoothing effect.

Another device for controlling the diaphragm aperture is disclosed in EP-A-0 114 404.

### SUMMARY OF THE INVENTION

It is an object of the present invention to provide a mechanism for detecting a rotation amount of diaphragm for use in optical systems, which is operable over a wide range with high accuracy.

In order to accomplish this object, there is provided a mechanism for detecting a rotation amount of a diaphragm for use in an optical system including an actuator mounted on a cover plate which is secured on a rear side of a base plate with respect to the front side of the optical system, and provided with a rotating axis projecting from a front end surface of the actuator to which an arm member is pivotably supported, said cover plate having a circular opening formed at the centre thereof and an annular projection extending from a periphery of the opening toward the front side of the optical system; diaphragm means comprising aperture blades pivotably supported around pins on the rear side of the base plate and having guide holes thereon; and rotating ring means provided, on an outer periphery thereof, with a notch into which an end of the arm member of the actuator is engaged, said rotating ring means having, on a rear side surface thereof, pins which are engaged into the guide holes of said aperture blades of the diaphragm means and an annular projection extending toward the rear side of the optical system to be engaged with the annular projection of the cover plate; said mechanism comprising: an arcuate magnet to be fixed on the outer periphery of said rotating ring means so that it extends along the circumferential direction of the rotating ring means wherein the magnet exhibits a single magnetic polarity to the exterior of the rotating ring means and has a gradient of magnetic force such that the magnetic force varies continuously along the circumferential direction of the rotating ring means; and detecting means for detecting magnetic leakage flux from said magnet and comprising a single Hall element to be secured in the cover plate so as to be disposed opposite said magnet and spaced at a given clearance apart therefrom, so that on the basis of the change in the amount of said magnetic flux detected by said Hall element, the rotation amount of the rotating ring means and the diaphragm blades can be determined.

### BRIEF DESCRIPTION OF THE DRAWINGS

FIG. 1 is a sectional view illustrating a diaphragm-operating mechanism in which a mechanism for detecting a rotation amount of a diaphragm according to one embodiment of the present invention is incorporated;
FIG. 2 is a rear view of the diaphragm-operating mechanism of FIG. 1;
FIG. 3 is a schematic rear view of a mechanism for detecting a rotation amount of a diaphragm according to another embodiment of the present invention;
FIG. 4 is a schematic side view of the mechanism of FIG. 3; and
FIG. 5 is a schematic sectional view of a conventional driving actuator for a rotating ring for use in a camera.

### DETAILED DESCRIPTION OF THE PREFERRED EMBODIMENTS

The preferred embodiments of a mechanism for detecting a rotation amount of a diaphragm, for use in an optical system, according to the present invention will now be described with reference to the accompanying drawings.

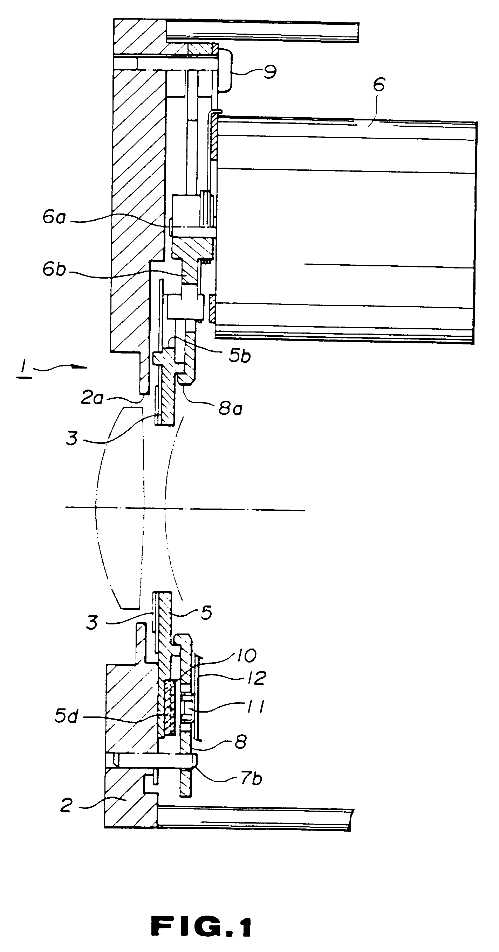

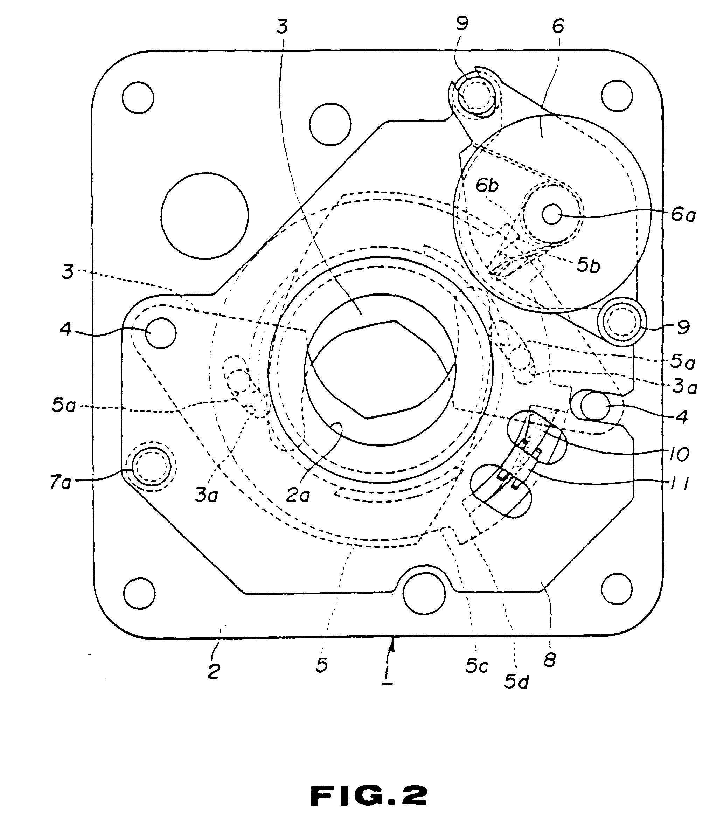

FIGS. 1 and 2 depict a diaphragm-operating mechanism for use in a camera such as a video camera. Referring to FIGS. 1 and 2, the diaphragm-operating mechanism 1 includes a square base plate 2 having a center opening 2a receiving a lens. On a rear side surface of the base plate 2, a pair of diaphragm blades 3, 3 are pivotably mounted around pins 4, 4 such that the opening 2a is closed or opened by rotating the diaphragm blades 3, 3. Each diaphragm blade 3 is provided with an arcuate guide hole 3a into which a pin Sa, protrudently formed on a front side face of the rotating ring 5, is engaged. The rotating ring 5 has a notch 5b on an outer periphery 5c thereof. Into the notch 5b is engaged an end portion of an arm member 6b which is rotatably mounted on a rotating axis 6a of an actuator 6. The actuator 6 is secured by screws 9, 9 to a cover plate 8 which is in turn fixedly secured to a rear side face of the base plate 2 by means of fastening members such as a screw 7a and a pin 7b. The cover plate 8 has a center opening 8a aligned with the opening 2a of the base plate 2. Along a front-side inner periphery of the cover plate 8 is formed an annular projection which engages a corresponding projection formed on the rear side of the rotating ring 5, whereby the rotating ring 5 is supportedly rotatable on the cover plate 8. In this configuration, when the actuator 6 is energized, the arm member 6b mounted on the rotating axis 6a forces the rotating ring 5 to rotate in a direction reverse to the rotational direction of the actuator 6, along the annular projection of the cover plate 8. The rotation of the rotating ring 5 causes the pins 5a, 5a to be moved along the guide holes 3a, 3a so that the diaphragm blades 3, 3 are urged to be pivotally moved around the pins 4, 4 so as to open or close the opening 2a of the base plate 2.

The rotating ring 5 is provided, on the outer periphery 5c, with an arcuate protrudent portion 5d on a rear side surface of which an arcuate recess is formed, as illustrated in FIG. 1. Within the arcuate recess, attached by adhesives or the like a magnet plate 10 having a uniform thickness is provided. The magnet plate 10 has one polarity, e.g. north-polarity, and is tapered in a circumferential direction of the rotating ring 5 so that the magnet plate 10 is of an approximately triangular shape, such that a magnetic force of the magnet plate 10 gradually alters due to the tapered shape of the magnet plate 10. A Hall element 11 is secured to the cover plate 8 by press fitting or the like so as to be disposed opposite and apart at a given clearance from the magnet plate 10. In FIG. 1, numeral 12 represents a flexible substrate attached to the element 11.

The mechanism for detecting a rotation amount of a diaphragm according to the preferred embodiment of the present invention includes the magnet plate 10 with gradually changed magnetic force which is attached to the rotating ring 5 for rotating the diaphragm blades 3, 3. When the rotating ring 5 is rotated by the actuator 6, the magnet plate 10 passes over the Hall element 11. The Hall element 11 opposite the magnet plate 10 detects change in an amount of magnetic leakage flux generated from the magnet plate 10. On the basis of the detected change in the amount of the magnetic flux, a rotation amount of the diaphragm blade 3 is determined. Since the magnet plate 10 is arranged at the arcuate protrudent portion 5d extending radially outwardly from the outer periphery 5c, an amount of movement of the magnet plate 10 in the circumferential direction of the rotating ring 5 is large. The mechanism according to the invention therefore can detect the rotation amount of the diaphragm blade 3 with high accuracy and fine detection capacity. Even in a case where the diaphragm blade has a relatively small diameter, the rotation amount of the diaphragm blade may be surely determined.

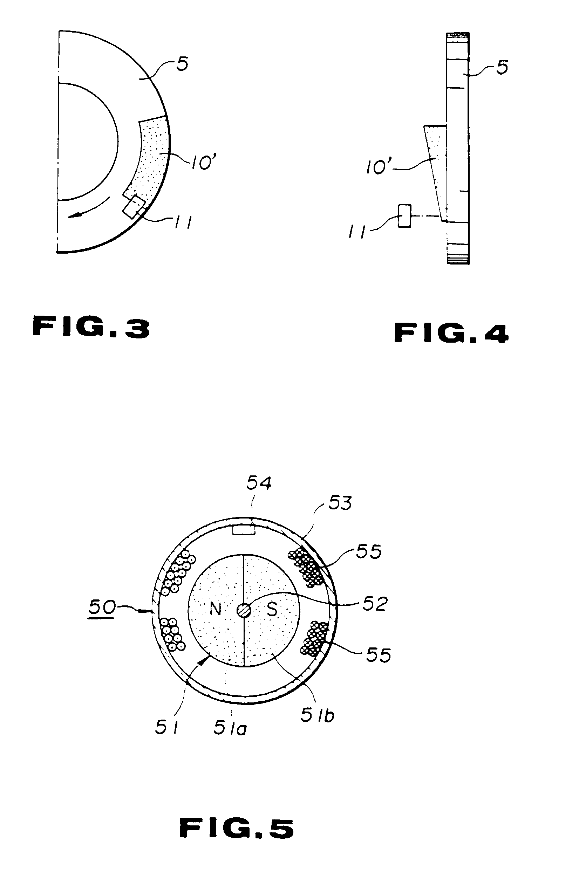

Another preferred embodiment of a mechanism for detecting a rotation amount of a diaphragm according to the invention will be described with reference to the accompanying drawings, in which like numerals indicate like parts of the mechanism of the first embodiment described above, and therefore detailed explanations thereof are omitted hereinafter. As illustrated in FIG. 3, a magnet plate 10', which is of an arcuate shape having a uniform radial width, is attached to an outer periphery of the rear side of a rotating ring 5 so as to extend circumferentially and be disposed opposite a Hall element. Moreover, the magnet plate 10' is tapered in thickness circumferentially to thereby have triangular shape in the axial cross section, as shown in FIG. 4. Thus, the magnet plate 10' has a magnetic gradient along which a magnetic force of the magnet plate 10' is reduced in a circumferential direction. The second embodiment may achieve the same function and effect as the first embodiment.

As is obvious from the aforementioned description of the preferred embodiments according to the invention, a mechanism for detecting a rotation amount of a diaphragm for use in an optical system includes a magnet having a gradient of magnetic force and a means for detecting magnetic leakage flux generated from the magnet. The magnet is fixedly arranged on an outer peripheral side of a rotating ring which rotates the diaphragm means of the optical system. The means for detecting magnetic flux is disposed opposite the magnet so as to be spaced at a given clearance apart from the magnet. To this end, an amount of movement of the magnet in a rotational direction is larger as compared with the conventional actuator in which both magnet and detecting means are incorporated. Accordingly, the amount of rotational movement of the diaphragm means may be detected with high accuracy and in a wide range.

As described in the first and second embodiments mentioned above, the magnetic gradient is produced by changing the width or thickness of the magnetic plate. However, the magnet plate may otherwise have a gradient of magnetic force by changing a density of the magnetic flux.

In addition, it will be noted that the detecting mechanism according to the invention is further applicable for detecting an amount of rotational movement of a lens barrel containing a zoom lens or the like.

## Claims

1. A mechanism for detecting a rotation amount of a diaphragm (3, 3) for use in an optical system including
an actuator (6) mounted on a cover plate (8) which is secured on a rear side of a base plate (2) with respect to the front side of the optical system, and provided with a rotating axis (6a) projecting from a front end surface of the actuator (6) to which an arm member (6b) is pivotably supported, said cover plate (8) having a circular opening (8a) formed at the centre thereof and an annular projection extending from a periphery of the opening toward the front side of the optical system;
diaphragm means (3, 3) comprising aperture blades pivotably supported around pins (4, 4) on the rear side of the base plate (2) and having guide holes (3a, 3a) thereon; and
rotating ring means (5) provided, on an outer periphery thereof, with a notch (5b) into which an end of the arm member (6b) of the actuator (6) is engaged, said rotating ring means (5) having, on a rear side surface thereof, pins (5a, 5a) which are engaged into the guide holes (3a, 3a) of said aperture blades of the diaphragm means (3, 3) and an annular projection (5d) extending toward the rear side of the optical system to be engaged with the annular projection of the cover plate (8); said mechanism comprising:
an arcuate magnet (10) to be fixed on the outer periphery of said rotating ring means (5) so t a it extends along the circumferential direction of the rotating ring means, wherein the magnet exhibits a single magnetic polarity to the exterior of the rotating ring means and has a gradient of magnetic force such that the magnetic force varies continuously along the circumferential direction of the rotating ring means (5); and
detecting means (11) for detecting magnetic leakage flux from said magnet and comprising a single Hall element to be secured in the cover plate (8) so as to be disposed opposite said magnet (10) and spaced at a given clearance apart therefrom, so that on the basis of the change in the amount of said magnetic flux detected by said Hall element, the rotation amount of the rotating ring means and the diaphragm blades can be determined.

2. The mechanism according to claim 1, wherein said magnet (10) has a uniform thickness and is tapered in a circumferential direction of said rotating ring means (5).

3. The mechanism according to claim 1, wherein said magnet (10) is of arcuate shape, has a constant radial width and is tapered in thickness outwardly from the rotating ring means.

4. The mechanism according to claim 1, wherein said magnet (10) has a magnetic flux density varying in a circumferential direction of said rotating ring means (5) while having a constant thickness and width.

5. The mechanism according to claim 1, wherein said rotating ring means (5) is mounted on a lens barrel containing a zoom lens.

## Patentansprüche

1. Mechanismus zur Ermittlung einer Drehverstellung einer Blende (3, 3) zur Verwendung bei einem optischen System, mit
einem Betätigungsglied (6), welches auf einer Abdeckplatte (8) befestigt ist, welche auf einer Rückseite einer Basisplatte (2) in bezug auf die Vorderseite des optischen Systems befestigt ist und mit einer Drehachse (6a) versehen ist, die von einer vorderen Endfläche des Betätigungsglieds (6) wegragt, an welcher ein Arm (6b) drehbar gelagert ist, wobei die Abdeckplatte (8) eine kreisförmige Öffnung (8a), welche in ihrer Mitte gebildet ist, und einen ringförmigen Ansatz hat, der sich von einem Umfang der Öffnung in Richtung auf die Vorderseite des optischen Systems ausdehnt;
einer Blende (3, 3), die Öffnungs-Lamellen umfaßt, die drehbar um Stifte (4, 4) auf der Rückseite der Basisplatte (2) gelagert sind und die Führungslöcher (3a, 3a) haben; und
einem Drehring (5), der auf seinem äußeren Umfang eine Aussparung (5b) besitzt, in die ein Ende des Arms (6b) des Betätigungsglieds (6) eingreift, wobei der Drehring (5) auf seiner hinteren Seitenfläche Stifte (5a, 5a) hat, die in die Führungslöcher (3a, 3a) der Öffnungs-Lamellen der Blende (3, 3) eingreifen, und einen ringförmigen Ansatz (5d), der sich in Richtung auf die Rückseite des optischen Systems erstreckt zum Eingriff mit einem ringförmigen Ansatz der Abdeckplatte (8);
wobei der Mechanismus umfaßt:
einen bogenförmigen Magneten (10), der auf dem äußeren Umfang des Drehrings (5) so befestigt ist, daß dieser sich längs der Umfangsrichtung des Drehrings erstreckt, wobei der Magnet eine einzige magnetische Polarität zur Außenseite des Drehrings zeigt und einen Magnetkraft-Gradienten hat, so daß sich die Magnetkraft stetig längs der Umfangsrichtung des Drehrings (5) ändert; und
eine Ermittlungseinrichtung (11) zur Ermittlung des magnetischen Streuflusses vom Magneten, die ein einziges Hall-Element aufweist, welches in der Abdeckplatte (8) so befestigt ist, daß es gegenüber dem Magneten (10) angeordnet ist und in einem vorgegebenen Abstand davon beabstandet ist, so daß auf der Basis der Änderung der Höhe des Magnetflusses, die durch das Hall-Element ermittelt wird, die Drehverstellung des Drehrings und der Blendenlamellen bestimmt werden kann.

2. Mechanismus nach Anspruch 1, wobei der Magnet (10) eine gleichförmige Dicke hat und in einer Umfangsrichtung des Drehringes (5) spitz zulaufend ist.

3. Mechanismus nach Anspruch 1, wobei der Magnet (10) eine bogenförmige Form hat, eine konstante radiale Breite hat und in der Dicke nach außen gerichtet vom Drehring spitz zulaufend ist.

4. Mechanismus nach Anspruch 1, wobei der Magnet (10 eine Magnetflußdichte hat, die in einer Umfangsrichtung des Drehrings (5) variiert, wobei er eine konstante Dicke und Breite hat.

5. Mechanismus nach Anspruch 1, wobei der Drehring (5) auf einem Linsenzylinder, der eine Zoomlinse enthält, befestigt ist.

## Revendications

1. Mécanisme destiné à détecter une valeur de rotation d'un diaphragme (3, 3) pour utilisation dans un système optique comprenant
un dispositif d'actionnement (6) monté sur une plaque de recouvrement (8) qui est fixée sur un côté arrière d'une plaque de base (2) par rapport au côté avant du système optique, et pourvu d'un axe de rotation (6a) qui dépasse d'une surface d'extrémité avant du dispositif d'actionnement (6) sur lequel est supporté de façon pivotante un élément de bras (6b), ladite plaque de recouvrement (8) ayant une ouverture circulaire (8a) formée au centre de celle-ci et une saillie annulaire qui s'étend depuis une périphérie de l'ouverture en direction du côté avant du système optique ;
des moyens de diaphragme (3, 3) comportant des lamelles d'ouverture supportées de façon pivotante autour d'axes (4, 4) sur le côté arrière de la plaque de base (2) et ayant des trous de guidage (3a, 3a) ; et
des moyens de bague rotative (5) pourvus, sur une périphérie extérieure, d'une encoche (5b) dans laquelle est engagée une extrémité de l'élément de bras (6b) du dispositif d'actionnement (6), lesdits moyens de bague rotative (5) ayant, sur une surface latérale arrière, des axes (5a, 5a) qui sont engagés dans les trous de guidage (3a, 3a) desdites lamelles d'ouverture des moyens de diaphragme (3, 3) et une saillie annulaire (5d) qui s'étend en direction du côté arrière du système optique afin d'être engagée avec la saillie annulaire de la plaque de recouvrement (8) ; ledit mécanisme comportant :
un aimant courbe (10) devant être fixé sur la périphérie extérieure desdits moyens de bague rotative (5) de telle sorte qu'il s'étend le long de la direction circonférentielle des moyens de bague rotative, l'aimant présentant une polarité magnétique unique à l'extérieur des moyens de bague rotative et ayant un gradient de force magnétique tel que la force magnétique varie en continu le long de la direction circonférentielle des moyens de bague rotative (5) ; et
des moyens de détection (11) destinés à détecter un flux de fuite magnétique dudit aimant et comportant un unique élément à effet Hall devant être fixé dans la plaque de recouvrement (8) de façon à être disposé en face dudit aimant (10) et espacé de celui-ci avec un jeu donné, de sorte que, sur la base du changement de la valeur dudit flux magnétique détecté par ledit élément à effet Hall, la valeur de rotation des moyens de bague rotative et des lamelles de diaphragme peut être déterminée.

2. Mécanisme selon la revendication 1, dans lequel ledit aimant (10) a une épaisseur uniforme et est en forme de coin dans une direction circonférentielle desdits moyens de bague rotative (5).

3. Mécanisme selon la revendication 1, dans lequel ledit aimant (10) est de forme courbe, a une largeur radiale constante et est en forme de coin dans le sens de l'épaisseur vers l'extérieur depuis les moyens de bague rotative.

4. Mécanisme selon la revendication 1, dans lequel ledit aimant (10) a une densité de flux magnétique qui varie dans une direction circonférentielle desdits moyens de bague rotative (5) tout en ayant une épaisseur et une largeur constantes.

5. Mécanisme selon la revendication 1, dans lequel lesdits moyens de bague rotative (5) sont montés sur un corps d'objectif contenant un objectif à focale variable.
